Europäisches Patentamt

European Patent Office

Office européen des brevets

(11) Veröffentlichungsnummer : **0 501 923 A1**

## (12) EUROPÄISCHE PATENTANMELDUNG

(21) Anmeldenummer : 92810132.8

(51) Int. Cl.⁵ : **B65G 47/252**

(22) Anmeldetag : 24.02.92

(30) Priorität : 28.02.91 CH 611/91

(43) Veröffentlichungstag der Anmeldung :
02.09.92 Patentblatt 92/36

(84) Benannte Vertragsstaaten :
AT CH DE FR GB IT LI SE

(71) Anmelder : DE LA RUE GIORI S.A.
4, rue de la Paix
CH-1003 Lausanne (CH)

(72) Erfinder : Sauer, Hartmut Karl
Obere Ringstrasse 47
W-8702 Himmelstadt (DE)

(74) Vertreter : Jörchel, Dietrich R.A. et al
c/o BUGNION S.A. Case postale 375
CH-1211 Genève 12 - Champel (CH)

(54) **Vorrichtung zum Wenden von flachen Objekten wie zum Beispiel von Wertscheinpaketen.**

(57)    Längs einer Wendezone ist an der Förderstrecke (1) ein Vorschubmechanismus mit einem Vorschuborgan (5) vorgesehen, das von einer Antriebseinrichtung periodisch aus einer Startstellung relativ zur Fördergeschwindigkeit beschleunigt in eine Endstellung vor- und wieder in die Startstellung zurückbewegt wird. Hinter der Startstellung sind eine aufwärtsgekrümmte Rampe (8) und im Abstand dahinter eine weiter aufwärtsgekrümmte Führungsbahn (9) für die auf der Förderstrecke (1) ankommenden, von Schiebern (3) bewegten Objekte (2a, 2b, 2c) installiert. Die ganze Anordnung ist so getroffen, dass in der Wendezone ein Objekt vom Vorschuborgan (5) übernommen und auf der Rampe (8) sowie der Führungsbahn (9) beschleunigt aufwärtsgestossen wird, bis es über seine aufrechte Stellung hinaus nach hinten kippt und, nach Rückbewegung des Vorschuborgans (5) aus seiner Endstellung, gewendet auf die Förderstrecke (1) zurückfällt.

EP 0 501 923 A1

Fig. 1

Fig. 2

Die Erfindung bezieht sich auf eine Vorrichtung zum Wenden von flachen Objekten, wie zum Beispiel von Wertscheinpaketen, die als Fördergut auf einer Förderstrecke mit Hilfe von Schiebern gleictiförmig transportiert werden.

Bisweilen ist es erforderlich, das auf einer Förderstrecke zwischen zwei Verarbeitungsstationen transportierte Fördergut zu wenden, derart, dass die ursprüngliche Oberseite der transportierten Objekte zur Unterseite wird, um beispielsweise die Orientierung des Objekts oder der das Objekt bildenden Einzelteile, im Falle von Wertscheinpaketen die Wertscheine, umzudrehen oder aber um die eine Aufschrift tragende Seite der die Objekte angebenden Banderolen oder Verpackungen relativ zur Förderstrecke zu wechseln.

Bei bisher bekannten Wendevorrichtungen ist es erforderlich, das Fördergut aus der Förderstrecke jeweils auszuschleusen, zu wenden und dann wieder an der korrekten Stelle in die Förderstrecke einzuschleusen.

Der vorliegenden Erfindung liegt die Aufgabe zugrunde, das aufwendige Aus- und Einschleusen der Objekte aus der bzw. in die Förderstrecke zu vermeiden und die Sequenz des Förderstroms zu erhalten. Gleichzeitig soll der Aufbau der Wendevorrichtung vereinfacht werden.

Diese Aufgabe wird erfindungsgemäss durch die im kennzeichnenden Teil des Anspruchs 1 angegebenen Merkmale gelöst.

Durch die Vorrichtung nach der Erfindung wird erreicht, dass jedes einzelne, auf der Förderstrecke transportierte Objekt in der Wendezone in gewisser Weise einen Ueberholvorschub erfährt, dabei auf der Führungsbahn mit seiner Vorderkante angehoben und über den Totpunkt hinaus soweit gekippt wird, dass es anschliessend mit der ursprünglichen Oberseite nach unten auf die Förderstrecke zurückfällt. Wenn die Förderstrecke weiter geradlinig verläuft, wird das gewendete Objekt vom ursprünglichen Schieber, der in der Zwischenzeit mit der normalen Fördergeschwindigkeit weiterbewegt wurde, wieder übernommen. Wenn die Fördereinrichtung am Ende der Wendezone wechselt, werden die gewendeten Objekte von den Förderorganen der neuen Förderstrecke in der korrekten Fördersequenz nacheinander übernommen.

Zweckmässige Ausgestaltungen der Vorrichtung nach der Erfindung ergeben sich aus den abhängigen Ansprüchen.

Die Erfindung wird anhand der Zeichnungen an einem Ausführungsbeispiel näher erläutert. Es zeigen:

Figuren 1 bis 4 schematische, stark vereinfachte Seitenansichten einer Vorrichtung nach der Erfindung, wobei vier verschiedene Phasen des Wendevorgangs veranschaulicht werden,

Figur 5 eine etwas detailliertere Seitenansicht der Wendevorrichtung im Schnitt längs der Linie V-V nach Figur 7,

Figur 6 eine schematische Draufsicht auf die Vorrichtung nach Figur 5,

Figur 7 einen Schnitt längs der Linie VII-VII nach Figur 5 und

Figur 8 eine schematische Darstellung der Antriebseinrichtung für das periodisch bewegte Vorschuborgan.

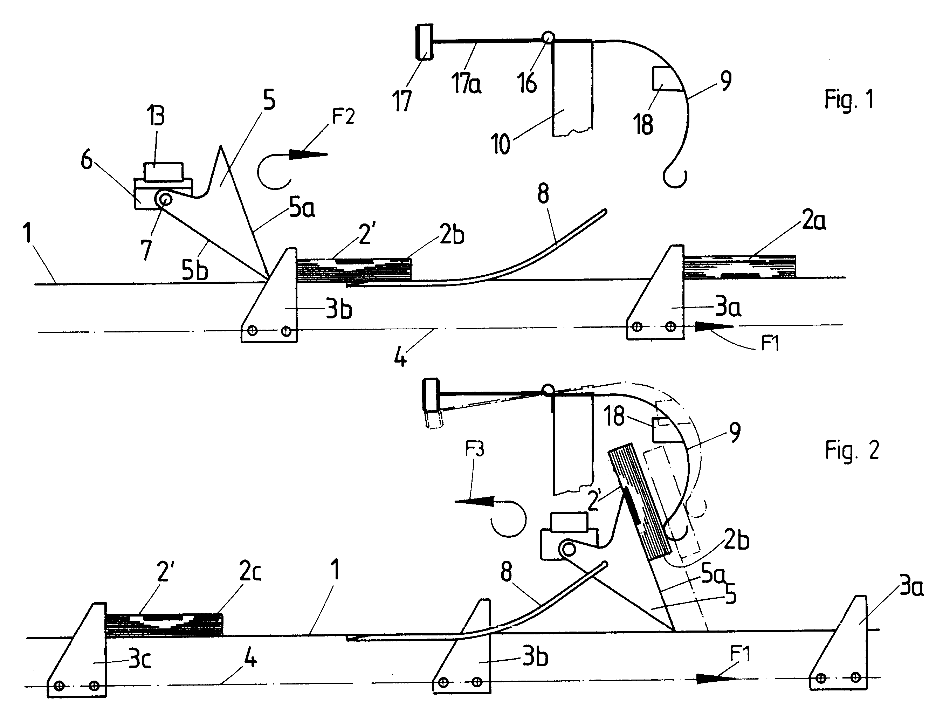

Nach den Figuren 1 bis 4 werden auf einer horizontalen Förderstrecke 1 Objekte, im betrachteten Beispiel banderolierte Wertscheinpakete 2a, 2b, 2c, mit Hilfe von Schiebern 3a, 3b, 3c transportiert, die sich mit konstanter Geschwindigkeit im Sinne des Pfeils F1 bewegen und gegen die Hinterkante der Wertscheinpakete stossen. Vor dem Wenden weist die durch einen dicken Strich markierte Seite 2' der Wertscheinpakete nach oben. Die Schieber 3a, 3b, 3c sind an einer gleichförmig bewegten, nur schematisch angedeuteten Kette 4, die unterhalb der Förderstecke 1 verläuft, befestigt und ragen mit ihren oberen Enden durch Schlitze über die Ebene der Förderstrecke hinaus.

Innerhalb der in den Figuren 1 bis 4 dargestellten Wendezone befindet sich ein die Wertscheinpaket beschleunigender Vorschubmechanismus, von dem nur das Vorschuborgan 5 dargestellt ist. Dieses Vorschuborgan 5 ist ein Kipphebel, welcher mittels eines Trägers 6 an einer Traverse 13 montiert und um einen quer zur Förderrichtung liegenden Zapfen 7 kippbar am Träger 6 gelagert ist. Die Traverse 13 befindet sich oberhalb der Förderstrecke 1 und wird parallel zu dieser bewegt. Der Kipphebel 5 hat ungefähr die Form eines nach unten spitz zulaufenden Dreiecks mit einer Vorderfläche 5a, die in Bezug auf die Förderrichtung F1 nach hinten geneigt ist, und mit einer Hinterfläche 5b. Die untere Spitze des Kipphebels 5 liegt auf der Förderstrecke 1 auf und gleitet auf dieser.

Mit Hilfe einer später noch erläuterten Antriebseinrichtung in Form eines Kurbelmechanismus führt die Traverse 13 mit dem Kipphebel 5 periodisch eine Hin- und Herbewegung aus, die, ausgehend von der in Figur 1 gezeigten Startstellung, in Richtung des Pfeils F2 nach vorn bis zu einer in Figur 2 strichpunktiert dargestellten Endstellung des Kipphebels 5 und von dort wieder im Sinne des Pfeils F3 zurück in die Startstellung verläuft. Dabei wird die Hinbewegung im Sinne des Pfeils F2 und auch die Rückbewegung des Kipphebels 5 in die Startstellung derart in Bezug auf die Fördergeschwindigkeit der Schieber 3a, 3b, 3c beschleunigt, dass die Periode für einen vollen Bewegungszyklus des Kipphebels 5 gleich dem Quotienten aus dem Abstand zweier aufeinanderfolgender Schieber 3a, 3b, also aufeinanderfolgender Objekte 2a, 2b, und der Fördergeschwindigkeit ist. Das heisst, dass zwischen den beiden Zeitpunkten, in denen der Kipphebel 5 zwei aufeinanderfolgende Startstellungen nach Figur 1 einnimmt, ein Schieber bzw. ein Wertscheinpaket gerade eine dem Abstand zweier aufeinanderfolgender Schieber entsprechende Strecke zurückgelegt hat. Die Bewegung des Kipphebels 5 ist mit der Förderbewegung der Schieber 3a, 3b, 3c derart synchronisiert, dass sich in der Startstellung des Kipphebels 5 ein Schieber, im betrachteten Beispiel der Schieber 3b, unmittelbar vor der unteren Spitze dieses Kipphebels 5 befindet, der aus dieser Lage heraus in Vorwärtsrichtung F2 beschleunigt wird.

Für den Wendevorgang sind eine tangential an der Förderstrecke 1 anliegende, aufwärts gekrümmte Rampe 8 und in Verlängerung der durch diese Rampe 8 definierten Bewegungsbahn, im Abstand vom oberen Ende der Rampe 8, eine weiter aufwärts gekrümmte Führungsbahn 9 vorgesehen, die zum Beispiel aus einem entsprechend gekrümmten Blech besteht. Diese Führungsbahn 9 ruht mit ihrem oberen, näherungsweise horizontal orientierten Ende auf einem Querträger 10 und ist dort an einer quer zur Förderrichtung ausgerichteten horizontalen Achse 16 schwenkbar gelagert. Das obere horizontale Ende der Führungsbahn 9 ist durch einen Arm 17a verlängert, der ein Ausgleichsgewicht 17 trägt, welches so bemessen ist, dass die Führungsbahn 9 aus ihrer in Figur 1 gezeigten Ruhestellung leicht entgegen dem Uhrzeigersinne um die Achse 16 gekippt werden kann. Ferner ist an der Führungsbahn 9 ein Anschlag 18 befestigt, der sich etwas oberhalb derjenigen Stelle befindet, an der die Führungsbahn vertikal orientiert ist.

Der Wendevorgang verläuft folgendermassen: Wenn der Kipphebel 5 nach Durchlaufen seiner Startstellung (Figur 1) beschleunigt wird, übernimmt er das bisher vom Schieber 3b bewegte Wertscheinpaket 2b, welches nunmehr beschleunigt die Rampe 8 aufwärts und, nach Ueberbrückung des Abstands zwischen Rampe 8 und Führungsbahn 9, auf die Führungsbahn 9 gestossen wird, bis die Vorderkante des Wertscheinpakets gegen den Anschlag 18 stösst. Dabei drückt das Wertscheinpaket unter der ständigen Schubwirkung des Kipphebels 5 gegen die Führungsbahn 9, die dadurch um die Achse 6 entgegen dem Uhrzeigersinne aufwärts verschwenkt wird, was durch das Ausgleichsgewicht 17 erleichtert wird. Durch den weiter vorrückenden Kipphebel 5 wird das Wertscheinpaket 2b aufgerichtet und über die um 90° gedrehte aufrechte Stellung hinaus ungekippt, bis es mit seiner ursprünglichen Oberseite 2' auf der Vorderfläche 5a des Kipphebels 5 zur Anlage gelangt. Zu diesem Zeitpunkt nimmt der Kipphebel 5 seine Endstellung und die Führungsbahn 9 ihre aufwärts verschwenkte Lage ein, wie in Figur 2 strichpunktiert dargestellt. Der Anschlag 18 hat den Zweck, das Wertscheinpaket beim Wendevorgang parallel zur Wendeachse zu halten. Die durch das Ausgleichsgewicht 17 erzielte leichte Schwenkbarkeit der Führungsbahn 9 verhindert ein mögliches Einklemmen des Wertscheinpakets.

Aufgrund der beschleunigten Vorwärtsbewegung des Kipphebels 5 befindet sich dieser, wenn er seine Endstellung nach Figur 2 erreicht, in einem bestimmten Abstand vor dem Schieber 3b, der ursprünglich das Wertscheinpaket 2b beförderte. Nach Erreichen seiner Endstellung beginnt der Kipphebel 5 seine beschleunigte Rückbewegung im Sinne des Pfeils F3. In Figur 2 ist mit durchgehenden Linien diejenige Stellung des Kipphebels 5 gezeigt, in welcher die vom Wertscheinpaket 2b entlastete Führungsbahn 9 wieder ihre Ruhestellung eingenommen hat, in welcher der Arm 17a horizontal orientiert ist.

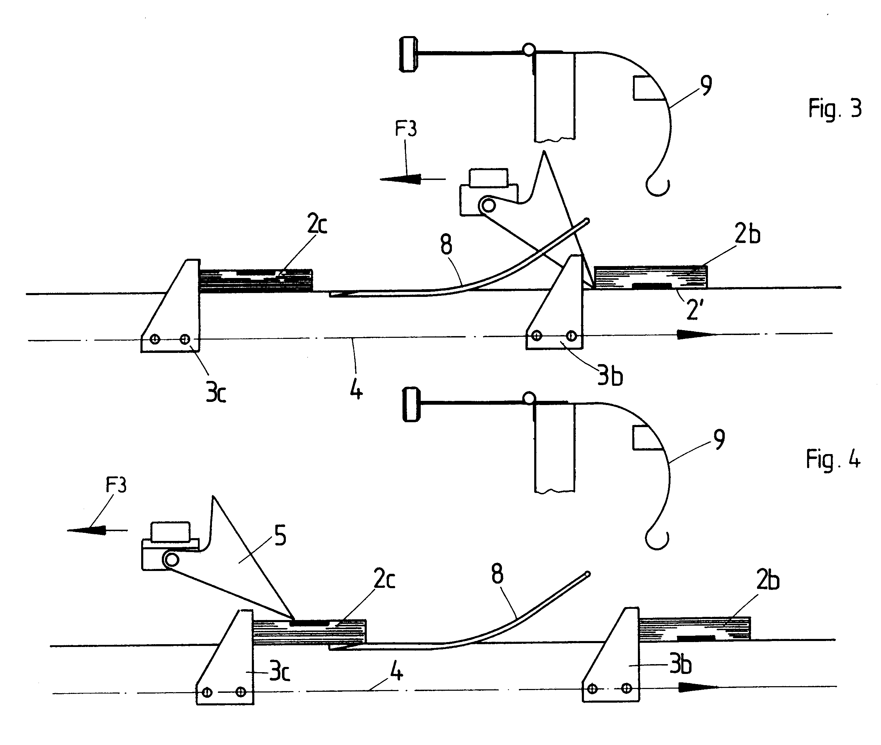

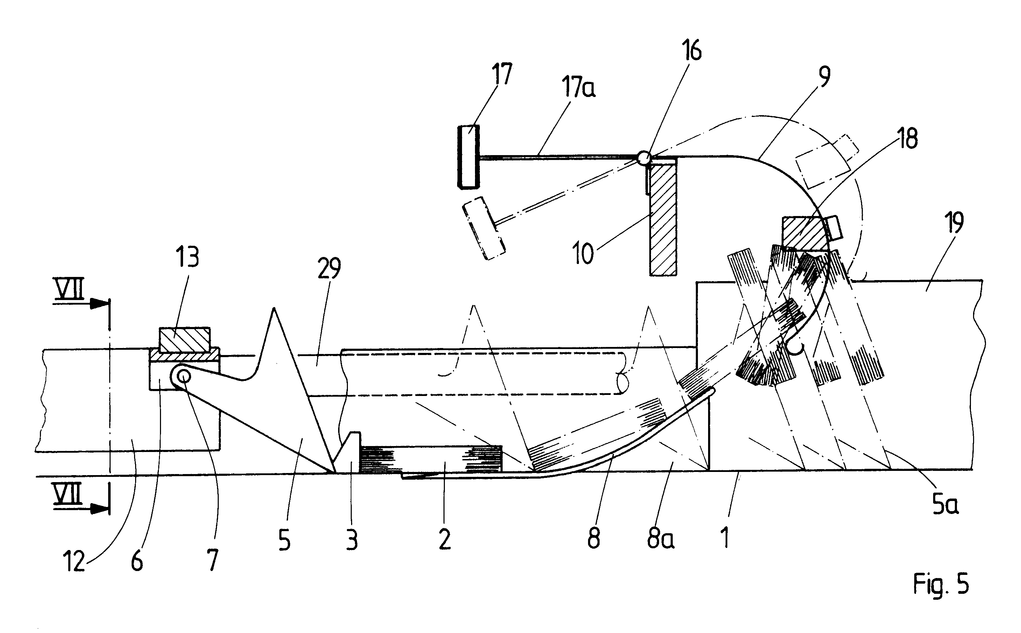

Das Wertscheinpaket 2b gleitet bei der weiteren Rückbewegung des Kipphebels 5 an dessen Vorderfläche 5a herunter, bis es, mit der ursprünglichen Oberseite 2' nach unten gerichtet, wieder flach auf der Förderstrecke 1 aufliegt (Figur 3). Dort wird es vom ursprünglichen Schieber 3b zur Weiterbeförderung übernommen (Figur 4), während der Kipphebel 5 in seine Startstellung zurückkehrt und dabei dank seiner gelenkigen Lagerung über das nachfolgende Wertscheinpaket 2c und den betreffenden Schieber 3c hinweggleitet. Sobald der Kipphebel 5 erneut seine Startstellung erreicht, befindet er sich unmittelbar hinter dem folgenden Schieber 3c, und der vorstehend beschriebene Wendevorgang wiederholt sich für das Wertscheinpaket 2c. Auf diese Weise bleibt die Fördersequenz der Wertscheinpakete nach dem Wenden erhalten.

Der bestand zwischen der Rampe 8 und der Führungsbahn 9, deren Gestalt sowie die Position der Endstellung des Kipphebels 5 und seine Form sind so gewählt, dass das Wertscheinpaket den beschriebenen und anhand der Figuren 1 bist 4 veranschaulichten Wendevorgang ausführt. Die Schwenkbarkeit der Führungsbahn 9 erlaubt es, den Zwischenraum zwischen der Rampe 8 und der Führungsbahn 9 so zu wählen, dass er in der Ruhestellung der Führungsbahn kleiner als die halbe Länge eines Wertscheinpakets, in der verschwenkten Stellung der Führungsbahn 9 jedoch gross genug ist, damit ein Wertscheinpaket ohne Behinderung durch die Rampe 8 ankippen und gewendet auf die Förderstrecke fallen kann. Dadurch wird erreicht, dass auch bei sehr langsamer Fördergeschwindigkeit jedes ankommende Wertscheinpaket auf die Führungsbahn 9 gelangt, ohne von der Rampe 8 herunterzufallen. Selbst bei einem Stillstand der Fördervorrichtung kann so ein über die Rampe 8 vorgeschobenes Wertscheinpaket nicht herunterfallen, so dass der Fördervorgang jederzeit wieder störungsfrei fortgesetzt werden kann.

Im Prinzip kann auch eine nicht schwenkbare, feste Führungsbahn 9 vorgesehen sein, wenn die Vorrichtung für einen Betrieb mit hinreichend hoher Fördergeschwindigkeit bestimmt ist; dann lässt sich nämlich der bestand zwischen Rampe 8 und Führungsbahn 9 grösser als die halbe Länge eines Wertscheinpakets machen, derart, dass der Schwung der beschleunigten Wertscheinpakete ausreicht, diese über den erwähnten bestand hinweg auf die Führungsbahn 9 zu stossen, von der sie dann, wie beschrieben, gewendet auf die Förderstrecke zurückfallen, ohne durch die Rampe 8 behindert zu werden. Gegebenenfalls kann auch auf den Anschlag 18 verzichtet werden.

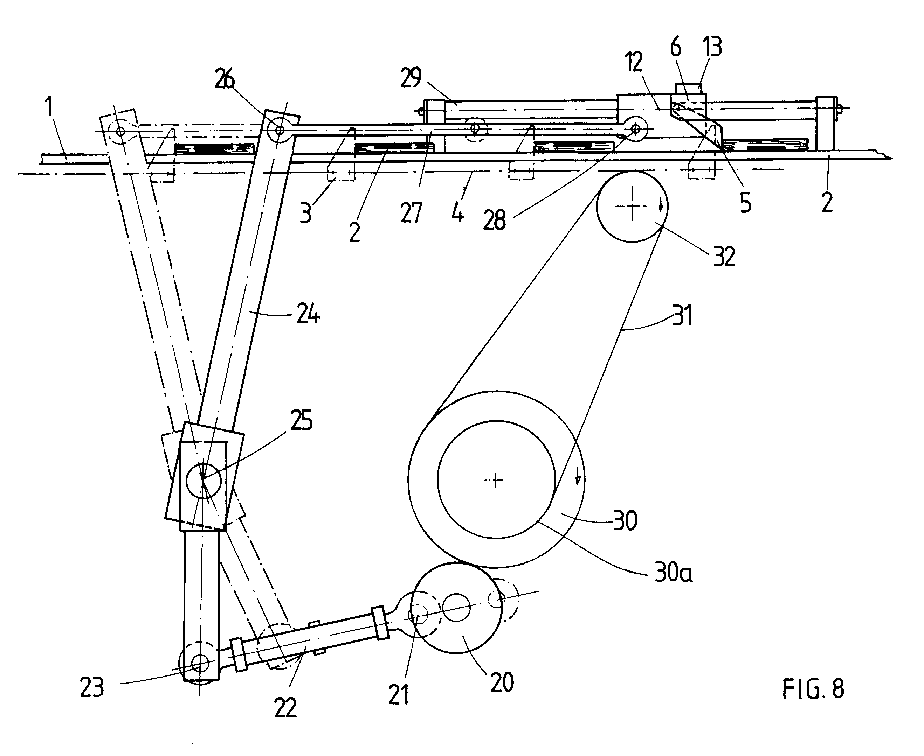

Die Figuren 5 bis 7 zeigen etwas genauer die wesentlichen Teile der in den Figuren 1 bis 4 angedeuteten Wendevorrichtung. Danach ragen die die Wertscheinpakete bewegenden Schieber 3, die an unterhalb der Förderstrecke 1 verlaufenden endlosen Retten befestigt sind, durch Schlitze 11, welche zwischen den die Förderstrecke 1 bildenden Platten vorgesehen sind. Im betrachteten Beispiel wird jedes Wertscheinpaket durch jeweils zwei nebeneinander liegende Schieber 3 bewegt, die an zwei synchron unlaufenden Ketten befestigt sind. Das Vorschuborgan besteht aus zwei nebeneinander angeordneten, um die Zapfen 7 schwenkbaren Kipphebeln 5, deren Träger 6 an der Traverse 13 befestigt sind und die sich innerhalb der beiden jeweils ein Paar bildenden Schieber 3 bewegen. Die Traverse 13 ist an einer Seite starr mit einem Gleitstück 12 verbunden, das zwei parallele Führungshülsen aufweist. Seitlich ausserhalb der Förderstrecke 1 sind zwei parallele feste Führungsschienen 29 montiert, auf denen das Gleitstück 12 mit seinen Führungshülsen in Kugelführungen längsverschiebbar gelagert ist. Der Antrieb der Traverse 13 mit den Kipphebeln 5 wird später anhand der Figur 8 beschrieben.

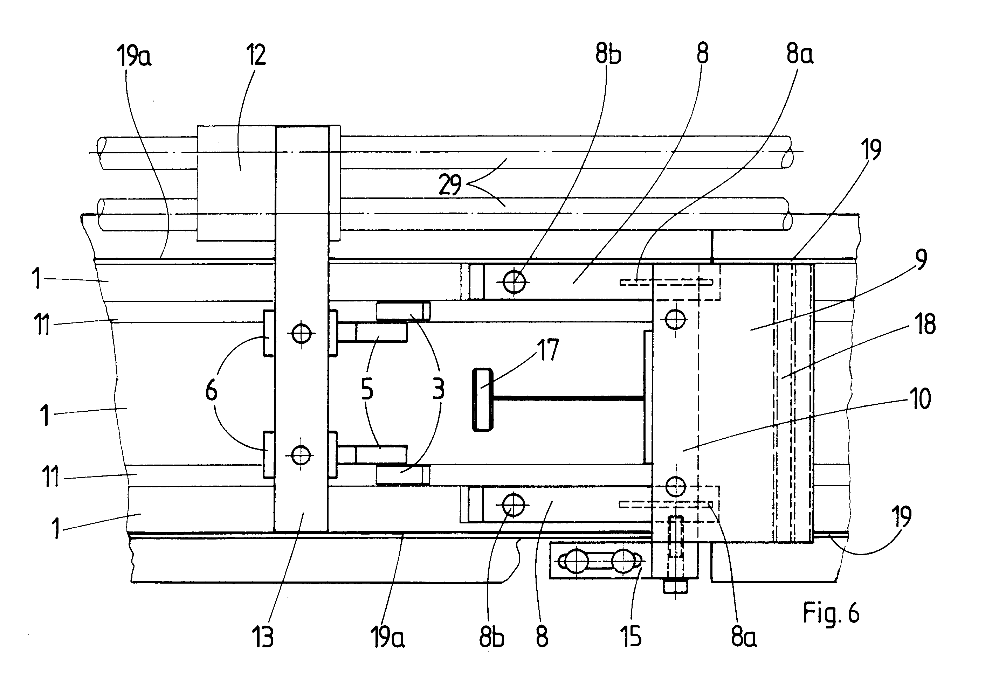

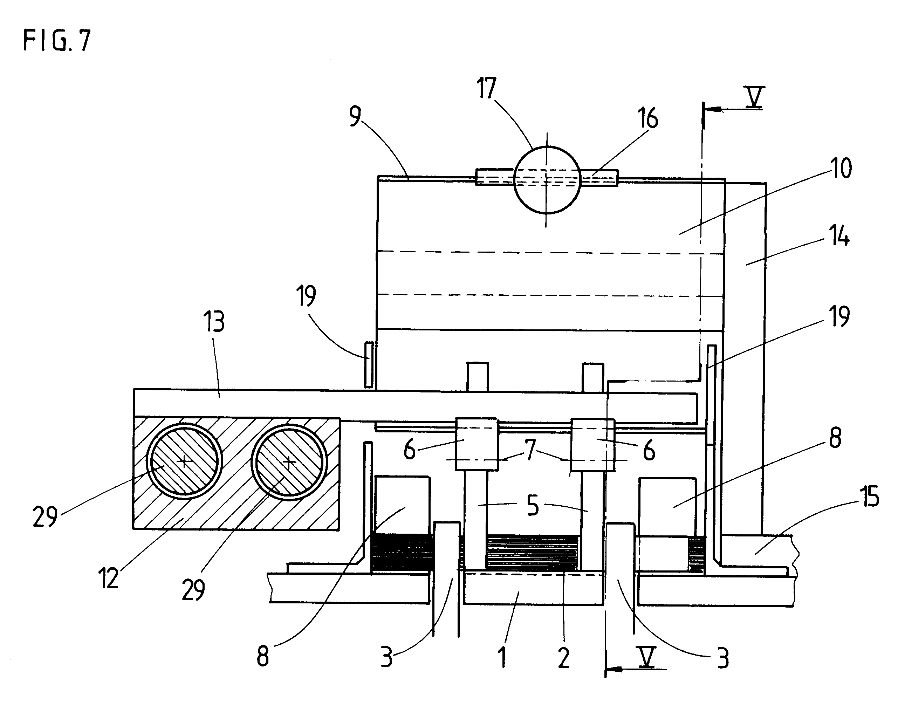

Die Rampe 8 besteht, wie die Figuren 5 und 6 zeigen, aus zwei aufwärtsgebogenen, auf Stützen 8a ruhenden Platten, die ausserhalb der Schieber 3 längs der beiden Ränder der Förderstrecke 1 verlaufen und deren Anfangszonen tangential an der Förderstrecke 1 anliegen und dort beispielsweise mit Senkschrauben 8b befestigt sind. Die mit dem Arm 17a und dem Ausgleichsgewicht 17 versehene gebogene Führungsbahn 9 ruht auf dem Querträger 10 und ist an die Achse 16 kippbar. Der Querträger 10 ist am einen Ende auf einer seitlichen Säule 14 befestigt, welche auf einer Grundplatte 15 (Figur 6 und 7) montiert ist, die parallel zur Förderrichtung eingestellt werden kann, so dass die genaue Stellung der Führungsbahn 9 relativ zur Rampe 8 justierbar ist.

Beiderseits der Führungsbahn 9 sind seitliche Führungswände 19 für die Wertscheinpakete vorgesehen. Davor können längs der Förderstrecke 1 ebenfalls Führungswände 19a (Figur 6) angeordnet sein.

Das Wenden eines Wertscheinpakets 2 ist in Figur 5 nochmals schematisch durch mehrere aufeinanderfolgende Positionen desselben dargestellt, die veranschaulichen, wie das Wertscheinpaket 2 über die Rampe 8 auf die Führungsbahn 9 bis zum Anstossen am Anschlag 18 geschoben wird, dabei die Führungsbahn 9 in die strichpunktiert angedeutete Stellung verschwenkt, dann umkippt und auf die Vorderfläche 5a der in ihrer Endstellung befindlichen Kipphebel 5 fällt. Bei der anschliessenden Rückbewegung der Kipphebel 5 gelangt das nunmehr gewendete Wertscheinpaket 2 wieder auf die Förderstrecke 1.

In Figur 8 ist schematisch der das Vorschuborgan 5, also die Kipphebel, antreibende Kurbelmechanismus dargestellt. Dieser weist ein Kurbelrad 20, eine an dessen Umfang mittels eines Zapfens 21 angelenkte Kurbelstange 22 und einen an deren Ende mittels eines Zapfens 23 angelenkten, zweiarmigen Hebel 24 auf, der um einen stationären Zapfen 25 kippbar ist und sich seitlich der Förderstrecke 1 über diese hinaus erstreckt. Am oberen Ende dieses Hebels 24 ist mittels eines Zapfens 26 ein Arm 27 angelenkt, der im wesentlichen parallel zur Förderstrecke 1 verläuft. Am anderen Ende dieses Arms ist mittels eines Zapfens 28 das Gleitstück 12 der Traverse 13 gelenkig gelagert. Das Gleitstück 12 mitsamt der Traversed 13 und den daran angeordneten Kipphebeln 5 ist längs der festen, parallel zur Förderstrecke 1 orientierten Führungsschienen 29 verschiebbar.

Die Anordnung ist so getroffen, dass während einer vollen Umdrehung des Kurbelrads 20 die Kipphebel 5 einen vollen Bewegungszyklus ausführen, das heisst, der Hebel 24 aus der in Figur 8 strichpunktiert dargestellten einen Endlage, welche der Starstellung der Kipphebel 5 entspricht, in die mit ausgezogenen Linien dargestellte Lage, welche der Endstellung der Kipphebel 5 entspricht, und wieder zurück bewegt wird. Die auf die Fördergeschwindigkeit der Schieber 3 abgestimmte Drehzahl des Kurbelrades 20 beträgt eine Umdrehung je Bewegungsperiode der Kipphebel. Der bei einer halben Umdrehung des Kurbelrades 20 ausgeführte maximale Hub des oberen Endes des Hebels 24 und damit der Kipphebel 5 ist im betrachteten Beispiel so gewählt, dass er ungefähr gleich dem Abstand zweier aufeinanderfolgender Schieber 3 ist.

Die vorgegebene Drehzahl lässt sich beispielsweise dadurch erreichen, dass das als Zahnrad ausgebildete Kurbelrad 20 von einem doppelt so grossen Zahnrad 30, dessen Zähnezahl also doppelt so gross wie die des Kurbelrades 20 ist, angetrieben wird und dass dieses Zahnrad 30 seinerseits von der die Schieber 3 bewegenden Kette 4 so gedreht wird, dass es eine volle Umdrehung ausführt, wenn sich die Kette 4 um eine dem doppelten Abstand benachbarter Schieber 3 entsprechende Strecke bewegt hat. Dazu ist nach Figur 8 ein von der Kette 4 bewegtes Kettenrad 32 vorgesehen, welches das Zahnrad 30 mittels einer Kette 31 antreibt, die über einen Zahnkranz 30a des Zahnrads 30 verläuft. Dabei ist im Falle, dass die Ketten 4 und 31 die gleiche Kettenteilung haben, die Zähnezahl des Zahnkranzes 30a gleich dem Doppelten der Anzahl von Gliedern, die die Kette 4 zwischen benachbarten Schiebern hat.

Die Anordnung kann auch so getroffen sein, dass die Kette 4 mit den Schiebern 3 vor der Endstellung der Kipphebel 5 endet und die von der Führungsbahn 9 auf die Förderstrecke 1 herunterfallenden, gewendeten Wertscheinpakete an dieser Stelle von den Schiebern einer weiteren, senkrecht zur Förderstrecke 1 verlaufenden Förderstrecke in der korrekten Sequenz sukzessive übernommen werden. In diesem Falle kann die Kette 4 direkt über das Kettenrad 32 und den Zahnkranz 30a des Zahnrades 30 verlaufen, und die Kette 31 entfällt.

Die Vorrichtung nach der Erfindung ist nicht auf das gezeigte Ausführungsbeispiel beschränkt, sondern lässt insbesondere hinsichtlich der Ausgestaltung der gekrümmten Führungsbahn 9 und des Antriebsmechanismus für das Vorschuborgan 5 mannigfache Varianten zu.

**Patentansprüche**

1. Vorrichtung zum Wenden von flachen Objekten (2a, 2b, 2c), wie zum Beispiel von Wertscheinpaketen, die als Fördergut auf einer Förderstrecke (1) mit Hilfe von Schiebern (3a, 3b, 3c) gleichförmig transportiert werden, dadurch gekennzeichnet, dass längs einer Wendezone ein die Objekte beschleunigender Vorschubmechanismus mit einem wenigstens näherungsweise parallel zur Förderstrecke bewegten Vorschuborgan (5) vorgesehen ist, das eine in Bezug auf die Förderrichtung nach hinten geneigte Vorderfläche (5a) hat und von einer Antriebseinrichtung (20 bis 27) periodisch aus einer Startstellung relativ zur Fördergeschwindigkeit beschleunigt in eine Endstellung vor- und wieder in die Startstellung zurück bewegt wird, wobei die Bewegungsperiode dieses Vorschuborgans (5) durch den Quotienten aus dem Abstand aufeinanderfolgender Objekte auf der Förderstrecke und der Fördergeschwindigkeit gegeben ist, und dass in der Wendezone eine aufwärts gekrümmte Rampe (8), deren Anfang zur Förderstrecke (1) tangential liegt, und im Abstand vom Ende dieser Rampe, in der durch diese definierten Bewegungsbahn, eine weiter aufwärts gekrümmte, bis wenigstens zur vertikalen Orientierung gebogene Führungsbahn (9) angeordnet sind, derart, dass jedes Objekt vom Vorschuborgan (5) beschleunigt auf der Rampe (8) und der Führungsbahn (9) hochgestossen, dann um einen Winkel über 90° hinaus nach hinten gekippt wird und, nach der Entfernung des Vorschuborgans (5) aus seiner Endstellung, gewendet auf die Förderstrecke (1) zurückfällt.

2. Vorrichtung nach Anspruch 1, dadurch gekennzeichnet, dass die gekrümmte Führungsbahn (9) an ihrem oberen Bereich um eine horizontale Achse (16) kippbar gelagert ist.

3. Vorrichtung nach Anspruch 2, dadurch gekennzeichnet, dass die gekrümmte Führungsbahn (9) einen Anschlag (18) für die Vorderkante des aufwärts gestossenen Objekts aufweist.

4. Vorrichtung nach den Ansprüchen 1 bis 3, dadurch gekennzeichnet, dass die gekrümmte Führungsbahn (9) über den Anschlag (18) hinaus bis näherungsweise zur Horizontalen gekrümmt ist und an ihrem oberen Ende ein Ausgleichsgewicht (17) trägt.

5. Vorrichtung nach einem der Ansprüche 1 bis 4, dadurch gekennzeichnet, dass beiderseits der gekrümmten Führungsbahn (9) seitliche Führungswände (19) vorgesehen sind.

6. Vorrichtung nach einem der Ansprüche 1 bis 5, dadurch gekennzeichnet, dass das Vorschuborgan (5) auf einer parallel zur Förderstrecke (1) orientierten Führungsschiene (29) bewegbar ist und aus wenigstens einem, bei der Rückbewegung schwenkbaren Kipphebel besteht.

7. Vorrichtung nach Anspruch 6, dadurch gekennzeichnet, dass die Antriebseinrichtung für das Vorschuborgan aus einem Kurbelmechanismus (20 bis 27) besteht, welcher von einem synchron mit der Fördergeschwindigkeit bewegten Element, insbesondere einer die Schieber bewegenden Kette (4), antreibbar ist.

Fig. 1

Fig. 2

EP 0 501 923 A1

Fig. 3

Fig. 4

Fig. 5

Fig. 6

FIG.7

FIG. 8

Europäisches
Patentamt

**EUROPÄISCHER RECHERCHENBERICHT**

Nummer der Anmeldung

EP    92 81 0132

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 567 005 (H. M. JOHNSON)<br>* das ganze Dokument *<br>--- | 1,7 | B65G47/252 |
| A | FR-A-1 134 529 (STAPLING MACHINES CØ)<br>* das ganze Dokument *<br>--- | 2,3 | |
| A | GB-A-1 153 525 (G. ASSMANN)<br>* das ganze Dokument *<br>--- | 1,6,7 | |
| A | DE-A-1 456 720 (FA. FR. MEESE)<br>* Ansprüche 1,5; Abbildungen *<br>----- | 1 | |
| | | | **RECHERCHIERTE SACHGEBIETE (Int. Cl.5)**<br><br>B65G |

Der vorliegende Recherchenbericht wurde für alle Patentansprüche erstellt

| Recherchenort | Abschlußdatum der Recherche | Prüfer |
|---|---|---|
| DEN HAAG | 25 MAI 1992 | VAN ROLLEGHEM F. |